# FASCICULE DE BREVET EUROPEEN

(11) **EP 2 414 815 B1**
(45) Date de publication et mention de la délivrance du brevet: **21.06.2017**
(21) Numéro de dépôt: 10715961.8
(22) Date de dépôt: 22.03.2010
(51) Int. Cl.: G01N 21/27, G01N 21/35, G01N 21/3581

(54) **IMAGERIE TÉRA-HERTZ À CONVERTISSEUR THERMIQUE PERFECTIONNÉ**
TERRA-HERTZ BILDGEWINNUNG MIT THERMISCHEM KONVERTER
TERA-HERTZ IMAGING WITH THERMAL CONVERTER

(30) Priorité: 01.04.2009 FR 0952097; 28.10.2009 FR 0957586
(43) Date de publication de la demande: 08.02.2012
(73) Titulaire: Centre National de la Recherche Scientifique (C.N.R.S.), 75794 Paris Cedex 16 (FR); Centre Technologique Alphanov, 33405 Talence (FR)
(72) Inventeur: PRADERE, Christophe, F-33140 Villenave d'Ornon (FR); BATSALE, Jean-Christophe, F-33410 Beguey (FR); CHASSAGNE, Bruno, F-33600 Pessac (FR); CAUMES, Jean-Pascal, F-33000 Bordeaux (FR)
(74) Mandataire: Cabinet Plasseraud
(86) Numéro de dépôt international: PCT/FR2010/050516
(87) Numéro de publication internationale: WO 2010/112730

(56) Documents cités:
- WO-A1-00/09977
- WO-A1-99/62023
- WO-A1-2006/102181
- US-A- 2 816 954
- US-A- 4 198 859
- US-A1- 2004 263 379
- KULIPANOV G N, ET AL: "Research Highlights from the Novosibirsk 400 W average power THz FEL" TERAHERTZ SCIENCE AND TECHNOLOGY, vol. 1, no. 2, 26 juin 2008 (2008-06-26), pages 107-125, XP002557703 Williamsburg ISSN: 1941-7411
- MALYUTENKO V ET AL: "UP-conversion of terahertz radiation induced by photon drag effect" PHYSICA E: LOW-DIMENSIONAL SYSTEMS AND NANOSTRUCTURES JANUARY 2004 ELSEVIER NL, vol. 20, no. 3-4, 16 juin 2003 (2003-06-16), pages 563-566, XP002557704

## Description

La présente invention concerne le domaine de l'imagerie, notamment pour des applications d'imagerie 2D en temps réel, dans le domaine spectral des ondes Téra-Hertz.

L'émergence de la technologie Téra-Hertz, domaine de longueur d'onde entre environ 3 mm et 30 µm, suscite une demande industrielle importante concernant aussi bien les sources, telles que les lasers pulsés ou les diodes continues, que les dispositifs imageurs, tels que les spectromètres, les caméras, ou autre. En particulier, la sécurité, le contrôle non destructif ou encore les applications de laboratoire de recherche motivent le développement de systèmes imageurs Téra-Hertz performants.

En réponse à ces demandes, les technologies de l'imagerie Téra-Hertz connaissent un développement selon deux axes.

Premièrement, le développement de systèmes imageurs passifs, avec mesure du rayonnement Téra-Hertz ambiant de la scène, se répand aujourd'hui largement dans le domaine de la sécurité. Que ce soit pour des applications militaires ou civiles, la vision de loin en milieu opaque (fumée, brume, etc.), la détection d'armes et de produits interdits (dans les aéroports par exemple) a poussé entre autre les performances des microbolomètres refroidis.

Deuxièmement, à un stade industriel moins avancé, les systèmes imageurs actifs, à partir d'un éclairage de la scène par une source Téra-Hertz externe, démontrent un potentiel d'application industriel croissant. L'apport d'une analyse spectroscopique dans l'imagerie avec les systèmes femto-secondes est devenu une particularité importante de la technologie avec le développement de sources laser pulsées couvrant une large bande de fréquences Téra-Hertz. Ceci ouvre ainsi un nouveau champ d'applications pour le contrôle non destructif en ligne alors même qu'aujourd'hui, les imageurs n'existent pas. L'imagerie spectroscopique Téra-Hertz, développée en laboratoire, présente aujourd'hui la meilleure sensibilité et la meilleure dynamique. Toutefois, l'intérêt industriel est aujourd'hui freiné par le fait que ce type d'imagerie se fait par un balayage point par point (détecteur mono-élément), nécessitant un temps long d'acquisition (plusieurs heures dues à la longueur du scan 2D à effectuer et à la fusion des données lors du traitement de l'image finale). Les dispositifs liés à ces techniques sont peu compacts et onéreux.

En vue d'exploiter ce potentiel, une activité importante s'est donc créée autour du développement de caméra d'imagerie large bande avec une acquisition en temps réel. Un premier produit commercial existe avec les caméras pyroélectriques, qui sont des détecteurs de mouvements de chaleur. La linéarité, la sensibilité et la dynamique des caméras pyroélectriques ne sont pas encore optimales pour l'imagerie mais uniquement pour le diagnostic de faisceau Téra-Hertz.

Aujourd'hui, la prochaine génération envisagée pour des détecteurs matriciels est encore au stade du test et du développement principalement orientés vers l'utilisation des caméras microbolométriques thermiques (sensibles dans la bande de 8-14 µm) non encore adaptées au domaine de longueur d'onde Téra-Hertz.

Les réalisations industrielles et technologiques pour le développement d'un système imageur en temps réel Téra-Hertz se trouvent principalement limitées aujourd'hui par le paramètre de la sensibilité et du rapport signal sur bruit (caméra pyroélectrique et micro-bolométrique non adaptées au domaine de longueur d'onde) pour les détecteurs matriciels. La sensibilité peut être augmentée en utilisant la cryogénie mais le coût est important pour obtenir une compacité et une portabilité du système.

Un autre axe de développement, à traverse une première tentative expérimentale utilisant un convertisseur thermique mono-élément, apte à transformer un rayonnement en chaleur, a été conduite sans succès. La faible sensibilité des composants utilisés impliquait la mise en oeuvre de sources Téra-Hertz de haute puissance (100 W) à partir d'un laser à électrons libres.

On connait ce type de technique notamment par le document : intitulé «Visualization of Radiation from a High-Power Téra-Hertz Free Electron Laser with a Thermosensitive Interferometer » par N. A. Vinoukorov et al., ISSN 1063-7842, Technical Physics, 2007, Vol. 52, n° 7, pages 911-919. Par ailleurs, ce type de technique ne donne actuellement aucune mesure absolue mais seulement une mesure relative du rayonnement.

En outre, le document WO 2006/102181 A1 propose un exemple de détecteur térahertz utilisant un détecteur thermique de type bolomètre comprenant un convertisseur THz et un élément de lecture. Le document WO 99/62023 propose un exemple de réduction du bruit de fond sur des capteurs, par exemple des capteurs CCD et thermiques infrarouge. Le document XP-002557703 décrit des résultats de recherche sur le rayonnement THz utilisant un laser à électrons libres.

Un des objets de la présente invention est de proposer un analyseur de rayonnement Téra-Hertz, notamment pour des applications d'imagerie Téra-Hertz en 2D, en temps réel et fonctionnant à température ambiante avec une bonne détectivité pour la plage spectrale considérée. Un autre objet de la présente invention est également de proposer un nouveau type de convertisseur thermique apte à être utilisé par exemple dans l'imageur mentionné ci-dessus.

A cet effet, la présente invention propose un dispositif d'analyse Téra-Hertz, notamment pour des applications d'imagerie, comportant :
- une source Téra-Hertz,
- un convertisseur de rayonnement Téra-Hertz en rayonnement thermique, et
- un détecteur thermique,
le convertisseur comportant au moins une zone sensible au rayonnement Téra-Hertz, agencée pour absorber le rayonnement Téra-Hertz et pour transformer le rayonnement absorbé en chaleur.

Au sens de l'invention, ladite zone sensible précitée est à proximité d'une zone de référence, de capacité d'absorption connue, et le détecteur thermique est agencé pour mesurer la chaleur générée par la zone sensible par rapport à la chaleur générée par la zone de référence. La zone sensible est formée par une pluralité d'éléments sensibles agencés en une matrice, les éléments sensibles étant séparés par des frontières formant la zone de référence

Ainsi, le dispositif d'analyse proposé est relativement simple, passif (ou actif pour une réalisation multi-spectrale, comme on le verra plus loin) et compact et par conséquent peu onéreux et facile à fabriquer industriellement. Le dispositif d'analyse fonctionne à température ambiante et permet notamment une imagerie Téra-Hertz en temps réel, moyennant un très rapide régime transitoire dû au temps de réponse du convertisseur et correspondant donc à son inertie thermique, laquelle est de quelques fractions de seconde à peine. On peut tenir compte de ce régime transitoire en quantifiant et en l'étalonnant avec une excitation de flux de chaleur calibrée, préalable. Le temps de réponse du détecteur thermique sera négligeable devant l'inertie thermique du convertisseur. Le convertisseur peut être un produit intégré sur une caméra infrarouge standard. De plus, le fait d'avoir une zone sensible au rayonnement Téra-Hertz à proximité d'une zone de référence permet d'obtenir une température absolue de la zone sensible.

Le détecteur thermique peut être équipé pour calculer, à partir de ladite mesure, une différence de température entre la zone sensible et la zone de référence.

Dans certains modes de réalisations la chaleur générée par la zone de référence est résiduelle et la différence de température est indicative de la puissance du rayonnement reçu par la zone sensible. Si la zone de référence n'absorbe pratiquement pas de rayonnement, on peut présumer que l'élévation de température de cette zone est nulle ou, tout au moins, résiduelle. Dans ce cas, la simple comparaison des températures des zones sensible et de référence indique la puissance de rayonnement Téra-Hertz reçue par le convertisseur.

Le convertisseur peut comporter une pluralité d'éléments sensibles agencés en une matrice formant la zone sensible, et séparés par des frontières formant la zone de référence. Le détecteur peut être agencé pour mesurer la chaleur générée par chaque élément sensible par rapport à la chaleur générée par la zone de référence pour déterminer une répartition spatiale du rayonnement Téra-Hertz sur le convertisseur.

Le détecteur peut comporter, quant à lui, au moins un capteur infrarouge, et le dispositif d'analyse, notamment pour des applications d'imagerie, comprend alors des moyens de focalisation optiques pour focaliser une image infrarouge du convertisseur sur le capteur infrarouge. Ceci permet d'utiliser un capteur infrarouge simple pour mesurer la chaleur de la zone sensible relativement à la zone de référence.

Dans une réalisation sophistiquée et particulièrement avantageuse, les éléments de la zone sensible du convertisseur sont agencés selon une matrice et le détecteur peut comporter, de son côté, une pluralité d'éléments sensibles au rayonnement infrarouge, tels une caméra à CCD (pour « Charge-Coupled Device ») ou préférentiellement à microbolométres (capteur matriciel sensible au rayonnement thermique). En complément ou en variante, comme décrit en détails plus loin, le détecteur peut comporter au moins un capteur de flux thermique, par exemple de type fluxmètre à effet Peltier, pour obtenir une valeur absolue du flux de chaleur généré par le convertisseur, et, de là, une valeur absolue de la quantité du rayonnement Téra-Hertz absorbée, transmise ou réfléchie par un objet illuminé par la source de rayonnement Téra-Hertz. Ce fluxmètre peut être accolé à la zone sensible au rayonnement Téra-Hertz, précitée.

En utilisant une caméra infrarouge, l'image infrarouge obtenue est alors une image numérique dont chaque élément correspond à un pixel d'image. Il peut être avantageux en particulier d'établir une correspondance entre au moins un élément d'un détecteur matriciel et chaque élément sensible du convertisseur. Ainsi, par exemple, à chaque élément sensible du convertisseur peut correspondre un pixel d'image infrarouge ou plus d'un pixel (4 ou 9 pixels par exemple) pour offrir une résolution d'image satisfaisante du convertisseur.

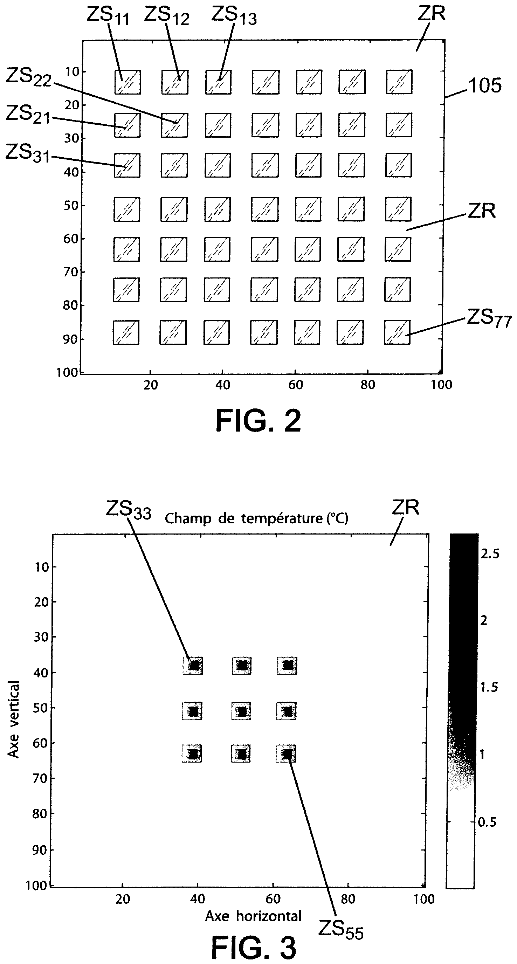

Dans une telle réalisation, chaque élément sensible du convertisseur peut se présenter sous la forme d'une alvéole de dimensions cubiques ou parallélépipédiques équivalentes à celle d'une longueur d'onde typique du rayonnement Téra-Hertz (ici de l'ordre de quelques dizaines de microns à 1000 microns), par exemple de l'ordre de 200µm. Des dimensions inférieures à la longueur d'onde maximale utilisée, donc dans l'exemple inférieures à 200µm de côté (dans un plan parallèle au plan de l'image infrarouge, comme le montre la figure 2 commentée plus loin) peuvent être satisfaisantes. Ces dimensions de 200µm s'expliquent ainsi relativement à la valeur de la longueur d'onde du rayonnement Téra-Hertz et en raison du critère de Rayleigh.

Chaque élément sensible ZSᵢⱼ (avec i=1, 2, 3,... et j=1, 2, 3, ... comme illustré sur la figure 2) est bordé par la zone de référence ZR dont l'absorption de la puissance Téra-Hertz est nulle ou résiduelle.

La présente invention vise également le convertisseur en tant que tel, pour convertir un rayonnement Téra-Hertz en un rayonnement thermique et comportant à cet effet au moins une zone sensible au rayonnement Téra-Hertz, la zone sensible étant agencée pour absorber le rayonnement Téra-Hertz et pour transformer le rayonnement absorbé en chaleur. Selon l'invention, cette zone sensible est à proximité d'une zone de référence, de capacité d'absorption connue, pour mesurer la chaleur générée par la zone sensible par rapport à la chaleur générée par la zone de référence.

Comme indiqué précédemment, le convertisseur peut comporter une pluralité d'éléments sensibles agencés en une matrice formant la zone sensible, et séparés par des frontières formant la zone de référence. Une matrice de N éléments comme représentée sur la figure 2 permet d'obtenir une résolution spatiale avantageuse et une réduction de diaphonie inter-élément.

La zone sensible peut comporter un matériau dont l'absorption Téra-Hertz est fonction de la longueur d'onde du rayonnement Téra-Hertz. Ceci permet de faire varier/adapter la capacité d'absorption de la zone sensible à la fréquence du rayonnement Téra-Hertz. Dans cette application « multi-spectrale », le convertisseur est actif. Chaque élément sensible (sous la forme d'une alvéole) peut comporter plusieurs circuits respectifs renfermant des matériaux térasensibles différents et surtout, sensibles à des fréquences Téra-Hertz différentes. On parle alors de « canaux micro-fluidiques », lesquels seront décrits plus en détail ci-après. Cet effet est avantageux dans certaines applications, par exemple si une forte capacité d'absorption est requise.

La zone sensible peut contenir au moins de l'eau, du verre ou/et des nanotubes de carbone, comme composés particulièrement sensibles au rayonnement Téra-Hertz. Le choix des matériaux utilisés aura ainsi un effet sur la capacité d'absorption de la zone sensible.

Dans l'application précitée de canaux, la zone sensible peut contenir au moins deux liquides térasensibles pouvant être inter-changés par des moyens de canaux (systèmes de canaux micro-fluidiques) pour être exposés au rayonnement Téra-Hertz dans des proportions choisies. La zone sensible (ou chaque élément de la zone sensible) et la zone de référence (pouvant border ces éléments) sont mitoyennes. Ceci permet d'obtenir un convertisseur compact et un bon contraste pour l'évaluation de la puissance de rayonnement en chaque élément sensible par rapport à une référence.

Il est possible en outre d'intercaler dans le convertisseur une couche isolante thermique entre la zone sensible et la zone de référence pour réduire des pertes thermiques de la zone sensible.

La présente invention prévoit également un procédé d'analyse Téra-Hertz, notamment pour des applications d'imagerie, dans lequel on prévoit un convertisseur de rayonnement Téra-Hertz en rayonnement thermique, comportant au moins une zone sensible au rayonnement Téra-Hertz, agencée pour absorber le rayonnement Téra-Hertz et pour transformer le rayonnement absorbé en chaleur. Selon l'invention, cette zone sensible est à proximité d'une zone de référence, de capacité d'absorption connue, et on mesure alors la chaleur générée par la zone sensible par rapport à la chaleur générée par la zone de référence, pour en déduire la puissance Téra-Hertz reçue par le convertisseur.

Comme indiqué précédemment, le convertisseur peut comporter une pluralité d'éléments sensibles agencés en une matrice formant la zone sensible, et séparés par des frontières formant la zone de référence, et on peut mesurer alors la chaleur générée par chaque élément sensible par rapport à la chaleur générée par la zone de référence pour déterminer une répartition spatiale du rayonnement Téra-Hertz sur le convertisseur.

Dans une application notamment à la sécurité des bagages, on peut interposer un objet (sac à main, ou autre) sur un chemin du rayonnement Téra-Hertz de puissance donnée entre une source du rayonnement Téra-Hertz et le convertisseur ; et on détermine une répartition spatiale de la puissance du rayonnement Téra-Hertz reçu sur le convertisseur. Ceci permet effectivement d'effectuer des contrôles non-destructifs d'objets.

On peut également déterminer une première répartition spatiale de la puissance du rayonnement Téra-Hertz reçue sur le convertisseur, sans disposer un objet sur le chemin du rayonnement, et déterminer une deuxième répartition spatiale de la puissance du rayonnement Téra-Hertz reçu, avec ensuite l'objet disposé sur le chemin du rayonnement. On compare alors la première répartition, de calibration, à la deuxième répartition. Lorsqu'il est indiqué ici que l'objet est placé sur le chemin du rayonnement, on entend aussi bien :
- une réception en transmission, par le convertisseur, du rayonnement Téra-Hertz que laisse « passer » l'objet (dans cette configuration, la source Téra-Hertz et le convertisseur étant placés de part et d'autre de l'objet à analyser et/ou imager),
- qu'une réception en réflexion, par le convertisseur, du rayonnement Téra-Hertz que renvoie l'objet vers le convertisseur (dans cette configuration, la source Téra-Hertz et le convertisseur étant placés d'un même côté par rapport au convertisseur).

La zone sensible peut comporter un matériau dont l'absorption Téra-Hertz est fonction de la longueur d'onde et on applique les étapes précitées ci-dessus en faisant varier la longueur d'onde pour obtenir une cartographie de l'objet en fonction à la fois de la puissance du rayonnement et de la longueur d'onde.

L'invention trouve son application dans le contrôle non destructif, en surveillance et en imagerie en milieu opaque en temps réel. Cette technologie peut se substituer à ou compléter certains tests en radiographie par rayons X avec pour bénéfice une irradiation non ionisante (contrairement aux rayons X).

D'autres caractéristiques et avantages de l'invention apparaîtront à l'examen de la description détaillée ci-après, et des figures annexées parmi lesquelles :
- la figure 1 illustre un exemple d'utilisation d'un système au sens de l'invention pour obtenir une image représentant le contenu d'un objet à imager,
- la figure 2 illustre une vue de face d'un convertisseur pour convertir un rayonnement Téra-Hertz en rayonnement thermique selon un mode de réalisation avantageux,
- la figure 3 illustre une vue de face du convertisseur de la figure 2, en opération,
- la figure 4 illustre un profil de température du convertisseur de la figure 2, en opération,
- la figure 5 illustre une vue de face d'un autre convertisseur pour convertir un rayonnement Téra-Hertz en rayonnement thermique selon un autre mode de réalisation,
- la figure 6 illustre une vue de face du convertisseur de la figure 5, en opération,
- la figure 7 illustre un profil de température du convertisseur de la figure 5, en opération,
- la figure 8 illustre un organigramme pour effectuer un procédé pour imager le contenu d'un objet selon un mode de réalisation,
- la figure 9B illustre un agencement d'un dispositif d'analyse Téra-Hertz utilisant un capteur thermique de type fluxmètre à effet Peltier, en variante d'une caméra infrarouge, à comparer avec la figure 9A représentant un dispositif d'imagerie utilisant une caméra,
- les figures 10A et 10B représentent schématiquement un capteur de flux thermique à effet Peltier, respectivement de face et de côté, accolé à un convertisseur thermique,
- la figure 11 représente la variation dans le temps du flux de chaleur mesuré par le fluxmètre à effet Peltier dans le cas d'une incidence directe du rayonnement Téra-Hertz sur le convertisseur (courbe A), et dans le cas où un matériau est interposé entre la source Téra-Hertz et le convertisseur,
- la figure 12 représente une courbe d'étalonnage électrique du capteur thermique, et
- la figure 13 est un schéma de principe d'un capteur multi-spectral utilisant une pluralité de convertisseurs thermiques CT1, CT2, CT3, sensibles à différentes longueurs d'onde du rayonnement Téra-Hertz.

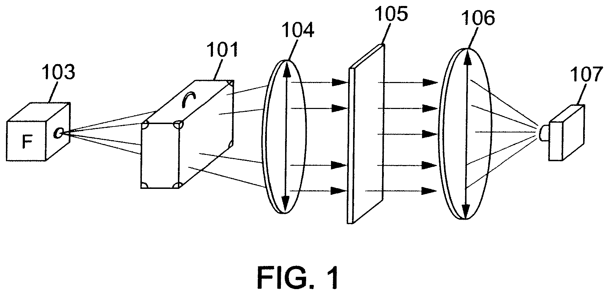

On décrit en détail différents modes de réalisations de la présente invention en faisant référence aux figures. Un premier mode de réalisation concerne un dispositif d'imagerie matriciel 2D en temps réel pour la bande spectrale de l'infrarouge lointain. La Figure 1 illustre une configuration pour effectuer un contrôle non destructif d'un objet 101, telle qu'une valise 101 pour une application liée à la sécurité des embarquements dans des aéroports.

Une source ou un émetteur Téra-Hertz 103 est agencé pour émettre des ondes électromagnétiques dans le domaine spectral des ondes Téra-Hertz, traversant alors, au moins partiellement, l'objet 101. La Figure 1 illustre également une lentille 104 pour orienter le rayonnement Téra-Hertz traversant l'objet à imager sur un convertisseur thermique au sens de l'invention. Le convertisseur se présente dans l'exemple décrit sous la forme d'une plaque transductrice 105 placée devant ou intégrée à un dispositif d'imagerie infrarouge, tel qu'un objectif 106, installé devant un détecteur thermique (par exemple une caméra thermographique infrarouge 107). La lentille 104 peut être en Téflon par exemple, ce matériau étant transparent au rayonnement Téra-Hertz et facile à usiner. Le convertisseur 105 est placé dans une position sensiblement transversale par rapport au chemin du rayonnement. Le convertisseur thermique 105 reçoit les ondes électromagnétiques rayonnées par la source 103 et traversant l'objet 101. Le convertisseur thermique 105 est agencé pour transformer les ondes électromagnétiques Téra-Hertz en chaleur comme expliqué plus en détail ultérieurement.

L'objectif 106 applique un certain grandissement permettant de conserver une résolution spatiale satisfaisante tout en fournissant une image du plan du convertisseur thermique 105 sur un détecteur thermique matriciel ou non (caméra 107). Cet objectif 106 peut être l'objectif de mise au point de la caméra 107. La caméra thermographique 107 délivre une image numérique (à pixels), de bonne résolution spatiale et permettant de mesurer finement une élévation de température induite par le rayonnement Téra-Hertz frappant le convertisseur thermique 105.

Le convertisseur thermique 105, l'objectif 106 et le détecteur 107 forment ensemble un nouveau type d'imageur Téra-Hertz. Cet imageur Téra-Hertz, fonctionnant à température ambiante, permet de faire de l'imagerie 2D en temps réel, dans le domaine spectral des ondes Téra-Hertz, par simple ajout d'un convertisseur thermique 105 sensible au rayonnement Téra-Hertz (ou «térasensible » ci-après) devant l'objectif 106 du détecteur 107. Par conséquent, le simple ajout proposé, permet pour une même caméra, d'avoir un imageur 2D, soit dans l'infrarouge thermique, soit dans le domaine Téra-Hertz. Ce nouveau domaine spectral (l'infrarouge très lointain, c'est-à-dire la longueur d'onde > 12µm, soit la fréquence < 25 THz) est encore largement vierge en termes d'imagerie thermique. Les imageurs 2D en temps réel actuellement sur le marché ne sont pas aussi modulables, pour les domaines spectraux considérés, que l'imageur de la présente invention.

Ce type d'imageur Téra-Hertz peut donc être totalement intégré. On peut alors intégrer en particulier le convertisseur 105 à l'objectif 106. Cette intégration peut être simplement par accolement mécanique. Dans une réalisation plus sophistiquée, comme les nanotubes de carbone présente de très bonnes propriétés d'absorption du rayonnement Téra-Hertz, il peut être prévu de déposer directement des nanotubes de carbone sur une surface de l'objectif 106 et à travers une grille pour séparer les éléments ZSᵢⱼ de la zone sensible au rayonnement Téra-Hertz.

La configuration illustrée sur la figure 1 fonctionne en transmission, les éléments 105, 106 et 107 étant placés derrière l'objet à imager 101. Dans ce cas là, si l'objet (par exemple une valise) contient un motif à repérer qui réfléchit ou absorbe le rayonnement Téra-Hertz (une arme métallique ou autre), le convertisseur ne reçoit pas de rayonnement dans une zone de sa surface par effet « d'ombre », cette zone illustrant le motif à repérer. On peut aussi envisager un montage du convertisseur en réflexion. Dans cette alternative, les éléments 105, 106 et 107 sont placés du coté de la source 103 et le convertisseur 105 reçoit des rayonnements réfléchis par l'arme.

Pour certaines applications, il est également possible que les objets à imager dans le domaine Téra-Hertz soient accolés directement au convertisseur 105.

Deux modes de réalisations du convertisseur 105 sont décrits ci-après :
- un convertisseur non-adiabatique (où la zone sensible n'est pas thermiquement isolée de la zone de référence) et
- un convertisseur isopéribolique ou adiabatique (sans couplage entre la zone sensible et la zone de référence).
Dans ces deux cas, le convertisseur reste térasensible. Seule la sensibilité thermique (élévation de température, diffusion thermique) change.

La Figure 2 illustre plus en détail la structure du convertisseur 105 selon le première mode de réalisation (cas d'un convertisseur non-adiabatique). Le convertisseur 105 comprend des zones sensibles ZS₁₁, ZS₁₂, ZS₂₁, ZS₂₂, ZS₃₁,... (notées ci-après ZSᵢⱼ avec i,j=1, 2, 3, ...) au rayonnement Téra-Hertz qui sont entourées par la zone de référence ZR. Ces zones sensibles ZSᵢⱼ sont aptes à convertir le rayonnement Téra-Hertz en rayonnement thermique. La figure 2 montre également une échelle horizontale et verticale. Cette même échelle est aussi utilisée sur les figures 3 à 7 pour faciliter la comparaison de ces figures.

Les zones sensibles peuvent être des alvéoles renfermant un matériau de type solide, liquide ou gazeux. Les alvéoles sont délimitées au moins sur le côté exposé au rayonnement Téra-Hertz par une paroi transparente au rayonnement Téra-Hertz (par exemple en téflon). On peut utiliser un matériau transparent au rayonnement thermique de l'autre côté du convertisseur pour délimiter les alvéoles, sur l'autre face du convertisseur.

Le matériau térasensible à l'intérieur des alvéoles pourra être ou contenir de l'eau, du verre ou des nanotubes de carbone. Les nanotubes de carbone sont des matériaux très résistants et durs et possèdent aussi une conductivité électrique et/ou thermique remarquablement élevée. Ces matériaux téra-absorbants, surtout quand ils sont liquides, peuvent être changés ou modifiés rapidement, grâce à des systèmes de canaux micro-fluidiques. Les zones sensibles peuvent donc contenir au moins deux liquides térasensibles pouvant être interchangés par des moyens de canaux pour être exposés au moins alternativement au rayonnement Téra-Hertz ou exposés en même temps au rayonnement mais avec des proportions respectives choisies. L'élévation de température du convertisseur thermique 105 est proportionnelle à la quantité de flux Téra-Hertz reçue. La sensibilité du système global dépend alors de l'efficacité d'absorption du matériau dans les alvéoles, dans la gamme spectrale Téra-Hertz.

Dans le cas d'un convertisseur non-adiabatique, le matériau n'est pas thermiquement isolé d'une zone de référence. Sur la figure 2, les carrés blancs (avec de légers reflets illustrant la transparence de la paroi de téflon au rayonnement Téra-Hertz) représentent les zones d'absorption ZSᵢⱼ qui sont mitoyennes de la zone de référence ZR, ici sans séparation par isolation thermique. Dans ce mode de réalisation, la zone de référence est du métal, par exemple de l'acier, qui est réfléchissante pour l'onde Téra-Hertz. Ainsi, dans ce mode de réalisation, la zone de référence n'est pas sensible au rayonnement Téra-Hertz. On peut dire que cette zone de référence a une valeur d'absorption connue, puisque cette valeur est nulle (ou tout au moins résiduelle). La valeur d'absorption de la zone de référence est, en tout état de cause, plus faible que la valeur d'absorption de la zone sensible.

Seule la partie térasensible va absorber ce flux. Sur la figure 2, cette partie sensible au rayonnement est représentée comme une matrice de N (N ≥ 1) éléments ou « pixels ». Une matrice de N pixels permet une pixellisation (résolution spatiale préférée) et la réduction de diaphonie inter-pixel. La largeur d'un pixel est proportionnelle à la longueur d'onde utilisée. Par conséquent, la largeur d'un pixel est par exemple dans la plage 50µm - 500µm (100µm correspondant typiquement à 3 THz). Avantageusement, un pixel de l'image obtenu par la caméra thermique 107 consiste en 3×3 pixels d'un convertisseur 105 lorsqu'il s'agit d'une caméra thermique délivrant une image numérique. Il est aussi possible d'envisager autres possibilités dans la limite qu'un pixel de l'image obtenu consiste en au moins un pixel du convertisseur 105.

En variante, il est possible d'envisager une réalisation dans laquelle la zone de référence est sensible au rayonnement. Toutefois, une contrainte s'impose et consiste en ce que la capacité d'absorption de la zone de référence soit bien connue en fonction du rayonnement incident. Cette réalisation permet encore d'effectuer une mesure absolue du rayonnement dans la zone sensible.

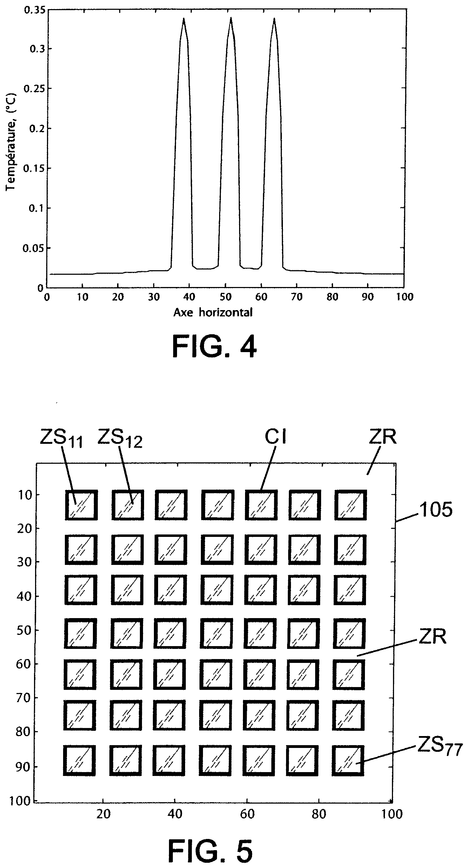

Cette absorption par la zone sensible génère une élévation de température comme illustrée sur les figures 3 et 4. La figure 3 montre une vue de face du convertisseur 105 tel que vue par la caméra thermique 107. L'échelle montrée sur cette figure illustre différents valeurs d'écarts de température en degrés Celsius. La couleur blanche correspond à une élévation faible et la couleur gris foncé correspond à une élévation forte. Le résultat montré est issu d'une simulation thermique 2D du champ de température obtenu lorsqu'on impose un flux de chaleur (thermo-source) dans les pixels situés au centre de la matrice du convertisseur 105. On peut remarquer la détection d'une température plus élevée par rapport au reste du convertisseur 105, au niveau de neuf éléments centraux dans l'exemple représenté. La zone de référence et les éléments sensibles non-rayonnés restent donc relativement froids. On peut aussi noter que les éléments sensibles deviennent progressivement plus chauds vers le centre du convertisseur.

La figure 4 montre un profil de température moyenné selon l'axe y. L'élévation de température de la zone de référence est résiduelle, proche de zéro degré. En pratique, le champ de température ainsi observé correspond au champ mesuré par la caméra infrarouge. On appréciera en particulier la finesse et la hauteur des pics par rapport au bruit de fond.

Différentes formes et tailles de profils des éléments absorbants/réfléchissants sont réalisables en fonction de la résolution spatiale désirée. Les zones d'absorption peuvent prendre par exemple des formes de carrés, de zones rondes, de bandes droites, etc. dont les directions peuvent varier entre les bandes horizontales et verticales, bandes circulaires, etc. La résolution de l'image obtenue peut être améliorée en diminuant la taille des zones d'absorption individuelles. Une zone de référence est néanmoins prévue en dimensions suffisantes pour obtenir une image fixe ou animée qui illustre le contenu de l'objet à imager, avec une résolution satisfaisante.

Le deuxième mode de réalisation, visant le cas du convertisseur isopéribolique, est illustré sur la figure 5. En l'occurrence, une couche isolante CI thermique (transparente à l'onde Téra-Hertz) est intercalée entre les zones sensibles et la zone de référence. Cette couche isolante agit en particulier sur le comportement thermique du convertisseur 105.

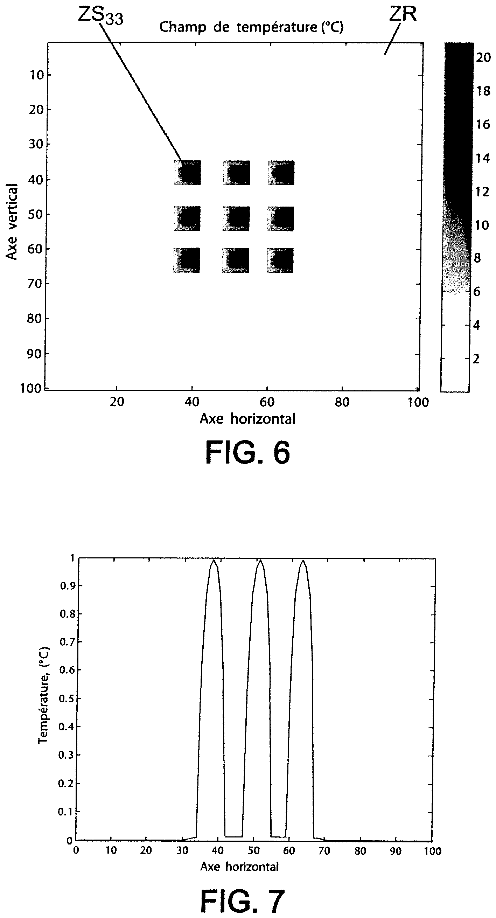

Les figures 6 et 7 montrent les résultats de simulation pour le convertisseur isopéribolique alors que les figures 4 et 5 montrent les résultats de la même simulation thermique 2D réalisée avec le convertisseur non-adiabatique. Il est à noter que sur la figure 6, l'échelle de température n'est pas la même que sur la figure 3. On notera aussi l'excellent rapport de hauteur de pic sur le niveau du bruit de fond sur la figure 7.

Selon le type d'application, il sera préférable d'utiliser l'un ou l'autre des modes de réalisation. En effet, dans le cas d'un convertisseur isopéribolique (figure 7), l'élévation de température est nettement supérieure à l'élévation de température dans le convertisseur non-adiabatique (la figure 4). Bien entendu, les pertes thermiques sont moins importantes dans le convertisseur isopéribolique et mieux maîtrisées (simple résistance thermique entre l'élément sensible et la zone de référence).

Le contraste entre la zone de référence et la zone sensible détermine le rapport signal sur bruit d'une image infrarouge (fixe ou vidéo). Comme indiqué auparavant, la zone de référence formée par une grille de N pixels (N ≥ 1) permet d'obtenir une résolution spatiale avantageuse. Cette grille peut avoir aussi pour fonction de réfléchir le rayonnement Téra-Hertz (dans un autre montage que celui représenté sur la figure 1), délimitant ainsi les limites des pixels. La diaphonie inter-pixel est éliminée efficacement si le matériau de la grille est aussi un bon conducteur thermique. En effet, ceci permet d'effectuer une mesure relative de température entre la grille (température de référence) et l'élément absorbant. Ce type de technologie est parfaitement adapté à des détecteurs de dimensions importantes puisque les imageurs thermographiques traditionnels permettent l'observation de grands champs avec une bonne résolution spatiale. On peut aussi mesurer avec précision la température de la grille de référence en utilisant un capteur de température par contact, par exemple une sonde platine. On comprendra alors que l'invention présentée ci-avant est susceptibles de multiples variantes selon les applications visées.

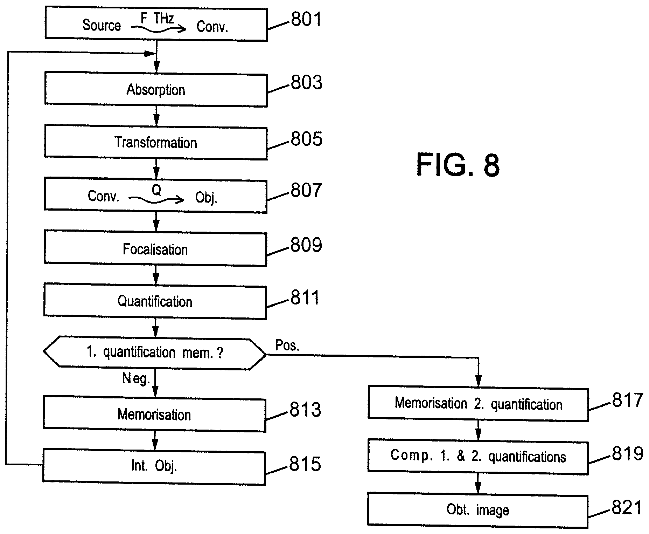

En référence à l'organigramme de la figure 8, on illustre le procédé selon un mode de réalisation pour obtenir l'image représentant le contenu de l'objet à imager. A l'étape 801, l'émetteur 103 émet un rayonnement Téra-Hertz vers le convertisseur thermique 105. Il en résulte que les zones d'absorption du convertisseur thermique 105 absorbent le rayonnement reçu (étape 803), en particulier dans les longueurs d'onde Téra-Hertz. A l'étape 805, sous l'effet de l'absorption du rayonnement Téra-Hertz, la température de ce convertisseur thermique 105 (convertisseur Téra-Hertz / IR) s'élève d'une quantité proportionnelle au flux Téra-Hertz reçu. On attend un régime permanent, stable, de l'élévation en température. Ce convertisseur thermique 105 réémet à l'étape 807 un rayonnement thermique Q selon la loi thermodynamique du corps noir. Ce rayonnement pourra être mesuré ou capté par le détecteur thermique 107, via un objectif 106, lequel, à l'étape 809, dirige le rayonnement thermique vers le détecteur 107. A l'étape 811, le détecteur thermique 107 quantifie le rayonnement thermique reçu sur le détecteur. Ceci permet de déterminer à la fois la puissance de l'onde Téra-Hertz reçue sur le convertisseur et sa représentation spatiale.

Si le résultat de la première quantification n'est pas encore mémorisé, le détecteur 107 mémorise à l'étape 813, le résultat de la quantification. Après la mémorisation de la première quantification, à l'étape 815, on place un objet devant le convertisseur thermique 105. Par conséquent, le rayonnement traverse l'objet et le procédé se poursuit donc à l'étape 803.

En revanche, si le résultat de la première quantification a déjà été mémorisé, on mémorise à l'étape 817 le résultat d'une deuxième quantification, obtenu lorsque le rayonnement traverse l'objet 101. A l'étape 819, on compare les résultats des première et deuxième quantifications. A partir de cette comparaison, on obtient à l'étape 821 une image représentant le contenu de l'objet 101.

Il est à noter qu'il n'est pas nécessaire d'obtenir une quantification effectuée sans l'objet. Pour obtenir une image, il suffit d'effectuer la quantification en plaçant directement un objet devant le convertisseur 105 sans nécessairement effectuer une quantification de référence. On appréciera ici le rôle que joue la zone de référence du convertisseur, permettant de se passer d'une première quantification, de référence.

On vient d'illustrer à travers ces exemples la faisabilité et la validité d'une matrice de thermo-convertisseurs térasensibles. A partir de là, plusieurs applications peuvent être envisagées. Tout d'abord, selon la sensibilité souhaitée, deux configurations thermiques, non-adiabatique ou isopéribolique, peuvent être utilisées. Dans chacun des cas, on accède à une puissance de rayonnement absolue via le détecteur 107. Cette puissance de rayonnement résulte de la différence entre la température moyenne d'un élément sensible et celle de la zone de référence qui l'entoure, avec un avantage plus important dans le cas isopéribolique où l'on maîtrise complètement les pertes thermiques entre l'élément sensible et la zone de référence au moyen d'une simple résistance thermique due à l'isolant intercalé. Grâce à ces dispositions, il est possible de quantifier le flux Téra-Hertz arrivant sur le détecteur, ce qui permet de déterminer à la fois la puissance de l'onde Téra-Hertz ainsi que sa représentation spatiale.

De par cet avantage, il est alors envisageable de réaliser une caméra adaptée à l'imagerie Téra-Hertz, en évaluant la transmission ou la réflexion d'un objet placé dans le champ Téra-Hertz, en effectuant en particulier la différence entre la répartition initiale de température mesurée sur le convertisseur 105 (sans objet à imager) avec celle obtenue lorsque l'objet est placé dans le champ.

Il peut être envisagé aussi une variante à l'utilisation du dispositif au sens de l'invention à l'imagerie Téra-Hertz, comme décrit ci-après. Il s'agit plus généralement d'une application à l'analyse Téra-Hertz avec en particulier une mesure quantitative, absolue, du rayonnement Téra-Hertz reçu par le convertisseur.

Ainsi, dans un autre mode de réalisation, on remplace la caméra infrarouge par un capteur solide, de type fluxmètre, associé au convertisseur décrit ci-avant, pour une mesure absolue du flux Téra-Hertz absorbé par le convertisseur. Une telle réalisation offre notamment comme avantage d'être à la fois plus économique et plus sensible que l'utilisation d'une caméra infrarouge. En effet, la sensibilité d'une caméra infrarouge est de l'ordre de 2000µW, contre 10µW pour un fluxmètre de type à effet Peltier.

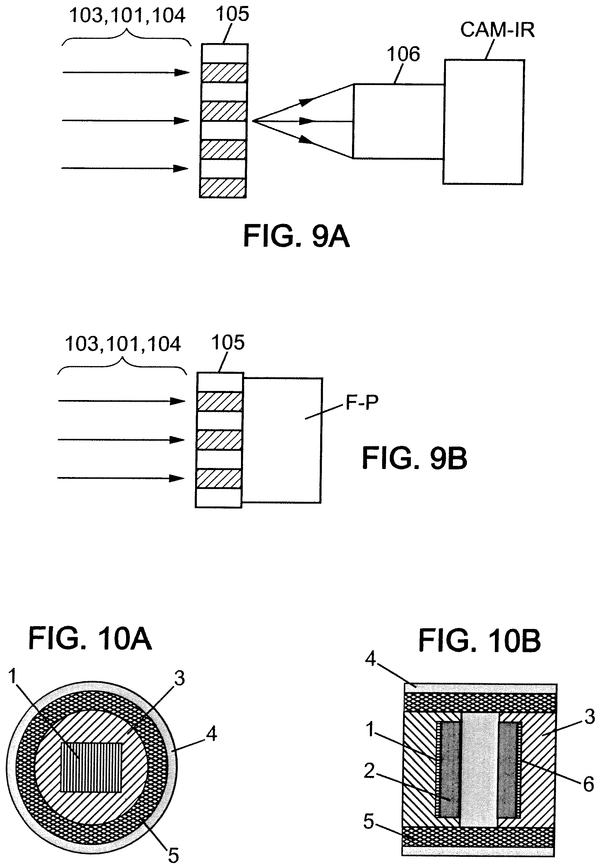

Dans ce mode de réalisation, comme représenté sur la figure 9B (à comparer avec la figure 9A, présentant un schéma équivalent à celui de la figure 1 commentée précédemment), la principale différence avec le mode de réalisation présenté précédemment et représenté sur la figure 9A (sur laquelle la référence CAM-IR désigne une caméra infrarouge) réside dans le type de capteur thermique 107, en sortie du convertisseur 105 de la figure 1. En effet, dans ce nouveau mode de réalisation, l'ensemble caméra infrarouge est remplacé par un fluxmètre, par exemple de type à effet Peltier, et portant la référence F-P sur la figure 9B. L'avantage d'une telle réalisation est la sensibilité de détection, en étant capable de mesurer des flux Téra-Hertz jusqu'à 1000 fois inférieurs à ceux que la caméra infrarouge peut mesurer, comme montré plus loin.

On se réfère maintenant aux figures 10A et 10B pour décrire un exemple de réalisation d'un tel capteur de flux infrarouge à effet Peltier, combiné à un convertisseur thermique Téra-Hertz/rayonnement infrarouge au sens de l'invention. Sur ces figures, la référence 1 désigne le convertisseur thermique. La référence 2 (de la figure 10B correspondant à une vue en coupe de profil) désigne le fluxmètre lui-même, agencé pour générer une tension électrique (en volts) en fonction d'un flux de chaleur injecté (en watts), par effet thermoélectrique. La référence 6 de la figure 10B est une résistance électrique chauffante pour l'étalonnage.

Un fluxmètre à effet Peltier fonctionne en général selon le principe suivant lequel une différence de températures aux bornes du fluxmètre (côté convertisseur thermique 2 d'une part, et côté résistance 6 d'autre part) est alors convertie en courant électrique dont on mesure par exemple une tension. Dans l'exemple de réalisation ici, on fixe une température dans le fluxmètre au voisinage de la résistance 6, laquelle sert d'ailleurs à maintenir constante cette température, et l'on mesure alors en valeur absolue, quantitativement et non relativement, le flux exact que reçoit le convertisseur thermique 1.

En référence toujours aux figures 10A et 10B, le convertisseur thermique 1 est encore entouré, comme exposé précédemment, par un isolant thermique 3, préférentiellement transparent dans le domaine des fréquences Téra-Hertz, de manière à s'assurer que l'ensemble du flux thermique recueilli en aval du convertisseur thermique 1 provient bien du convertisseur thermique 1, seul. L'ensemble est encore isolé thermiquement par une gaine isolante 5. Une armature métallique 4, isotherme, enferme ces différents éléments, pour ses propriétés d'inertie thermique.

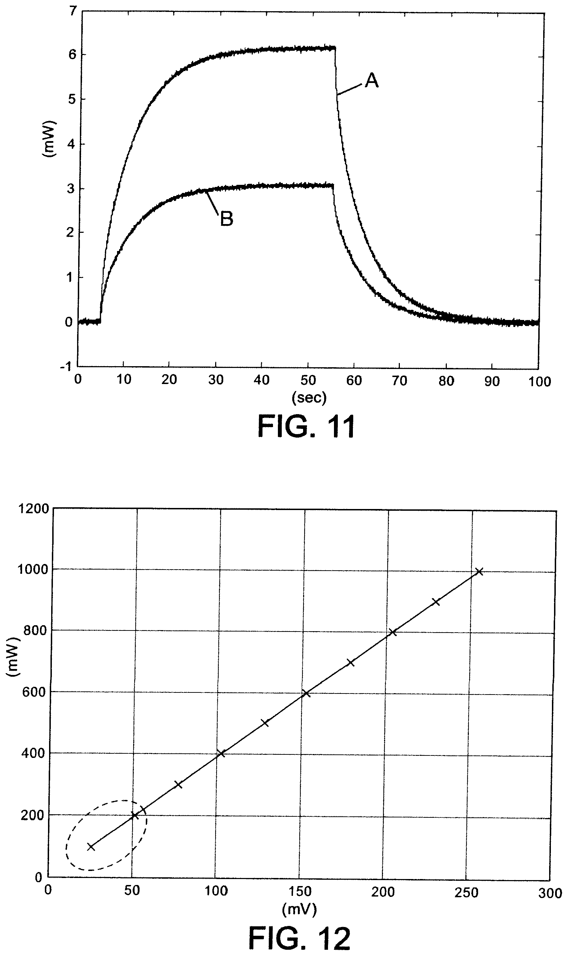

Les essais réalisés avec une telle configuration montrent bien que l'on mesure en valeur absolue, quantitativement, le flux exact que reçoit le convertisseur thermique 1. On a représenté en effet sur la figure 11 la variation dans le temps de la puissance en milliwatts (mW) du flux que mesure le fluxmètre à effet Peltier :
- sur la courbe A, à partir d'un rayonnement Téra-Hertz directement issu d'une source Téra-Hertz, sans interposition d'un quelconque objet entre la source et le convertisseur thermique 1, et
- sur la courbe B, en interposant entre la source et le convertisseur thermique 1 un matériau tel qu'une feuille de carbone dont on sait préalablement que l'absorption du flux Téra-Hertz est de 50%.

On constate bien que la puissance mesurée pour la courbe B atteint, après stabilisation dans le temps, exactement la moitié de celle atteinte pour la courbe A. Il est donc possible de mesurer à l'aide du fluxmètre une puissance quelconque issue d'un faisceau Téra-Hertz. On envoie alors le faisceau Téra-Hertz directement issu de la source sur le thermo-convertisseur 1. On obtient alors l'évolution transitoire du flux en fonction du temps (courbe A de la figure 11). En effectuant la différence entre le flux initial et le flux final (en régime permanent), on obtient le flux incident délivré par la source Téra-Hertz. Ensuite, il suffit d'intercaler un objet à imager pour en déduire son absorption.

Une précaution à prendre toutefois consiste à étalonner correctement le fluxmètre. A cet effet, on utilise la résistance électrique 6 pour injecter différentes puissances électriques en Watts dans l'ensemble fluxmètre-convertisseur. On mesure ensuite la tension résultante aux bornes du fluxmètre. En référence à la figure 12, on trace cette tension mesurée en fonction de la puissance électrique injectée, pour constater déjà une variation linéaire et déterminer alors un coefficient d'étalonnage en volts par watts (V/W), et ce pour un fluxmètre donné. Typiquement, ce coefficient peut varier d'un fluxmètre à l'autre de 0,25 à 1 V/W.

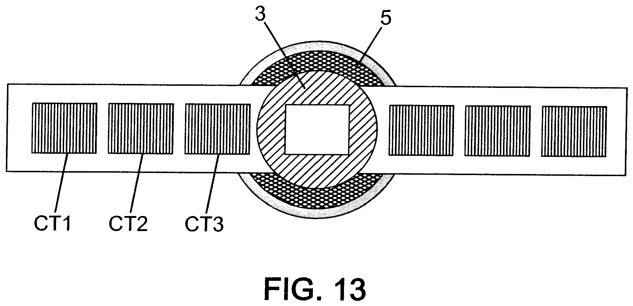

Comme on le relèvera sur la figure 12, il est possible de mesurer des flux Téra-Hertz extrêmement faibles (région entourée en traits pointillés). On peut effectivement mesurer, en pratique, des flux de l'ordre de la dizaine de nano-watts, ce qui devrait permettre d'utiliser des sources Téra-Hertz à cadence de type femto-secondes. De même, il est possible aussi de placer une roue à filtres ou un élément de défilement de différents convertisseurs thermiques CT1, CT2, CT3, ..., pour obtenir un capteur multi-spectral, comme représenté sur la figure 13. Par ailleurs, une amélioration peut être attendue aussi pour l'inertie thermique des fluxmètres (actuellement de l'ordre de quelques dizaines de secondes pour atteindre un régime permanent).

Il est possible de prévoir des fluxmètres individuels pour chaque élément ZSᵢⱼ du convertisseur de la figure 2 ou de la figure 5. Dans ce cas, on peut prévoir par exemple une pluralité de fluxmètres de quelques centimètres de diamètre, accolés chacun à un élément ZSᵢⱼ (ou à un groupe de quelques éléments mitoyens ZSᵢⱼ). En variante, il est possible aussi de prévoir un unique fluxmètre de plus grandes dimensions (par exemple quelques dizaines de centimètres) et de mesurer une moyenne de flux thermique sur l'ensemble des éléments du convertisseur 105. Cette réalisation permet par exemple de mesurer précisément la quantité de rayonnement Téra-Hertz absorbée par un objet interposé entre la source et le convertisseur (pour l'analyse d'une poudre, par exemple à nanotubes de carbone, pour en déduire le pourcentage de nanotubes, ou autres). Ainsi, dans une telle application, une large gamme d'utilisation peut être prévue telle que l'analyse (caractérisation) de faisceau Téra-Hertz (puissance, répartition spatiale), la mesure de transmission d'un matériau dans le domaine Téra-Hertz, ou autres.

Il est possible aussi de mettre en oeuvre des applications d'imagerie à partir d'un unique fluxmètre. En effet, on peut prévoir de collimater le faisceau Téra-Hertz à diriger vers un objet à imager. On applique alors un balayage de ce faisceau sur la surface de l'objet pour en obtenir une image Téra-Hertz (par scans successifs horizontaux ou verticaux). On peut aussi prévoir un mode de réalisation mixte utilisant une caméra infrarouge comme décrit précédemment, ainsi qu'un fluxmètre accolé à l'un au moins des éléments du convertisseur 105, pour déterminer une valeur absolue de flux reçu, cette valeur étant une référence permettant de déduire chaque valeur absolue de flux reçu en chaque pixel de la caméra.

Bien entendu, la présente invention ne se limite pas aux formes de réalisation décrites ci-avant à titre d'exemple ; elle s'étend à d'autres variantes.Ainsi, on a présenté ci-avant un fluxmètre de type à effet Peltier. Toutefois, d'autres fluxmètres peuvent être envisagés, notamment un fluxmètre de type pyromètre. Un tel fluxmètre présente l'avantage, pour certaines applications, d'être plus rapide qu'un fluxmètre à effet Peltier.

Par ailleurs, le choix des éléments térasensibles utilisés ZSᵢⱼ peut être optimisé. Des « matériaux » dont l'absorption Téra-Hertz est fonction de la longueur d'onde tels que des cristaux liquides en particulier, ou encore des liquides neutres avec des concentrations variables en térasensibilité, peuvent être utilisés. On peut réaliser ainsi un détecteur multi-spectral et obtenir alors une cartographie en fonction de la puissance du rayonnement et de la longueur d'onde.

Enfin, l'ensemble de ces applications, aujourd'hui envisagées en régime permanent, sera également développé en régime transitoire pour une meilleure efficacité et rapidité de détectivité.

## Revendications

1. Dispositif d'analyse Téra-Hertz comportant :
une source Téra-Hertz (103),
un convertisseur (1, 105) de rayonnement Téra-Hertz en rayonnement thermique,
et un détecteur (107) thermique,
le convertisseur comportant au moins une zone (ZS₁₁, ZS₁₂, ZS₂₁, ZS₂₂, ZS₃₁) sensible au rayonnement Téra-Hertz, agencée pour absorber le rayonnement Téra-Hertz et pour transformer le rayonnement absorbé en chaleur,
**caractérisé en ce que** ladite zone sensible est à proximité d'une zone de référence (ZR), de capacité d'absorption connue,
et **en ce que** le détecteur thermique est agencé pour mesurer la chaleur générée par la zone sensible par rapport à la chaleur générée par la zone de référence, la zone sensible étant formée par une pluralité d'éléments sensibles agencés en une matrice, les éléments sensibles étant séparés par des frontières formant la zone de référence.

2. Dispositif selon la revendication 1, **caractérisé en ce que** le détecteur thermique est équipé pour calculer, à partir de ladite mesure, une différence de température entre la zone sensible et la zone de référence.

3. Dispositif selon la revendication 2, **caractérisé en ce que** la chaleur générée par la zone de référence est résiduelle et **en ce que** la différence de température est indicative de la puissance du rayonnement reçu par la zone sensible.

4. Dispositif selon l'une des revendications précédentes, **caractérisé en ce que** le détecteur est agencé pour mesurer la chaleur générée par chaque élément sensible par rapport à la chaleur générée par la zone de référence pour déterminer une répartition spatiale du rayonnement Téra-Hertz sur le convertisseur.

5. Dispositif selon l'une des revendications précédentes, **caractérisé en ce que** le détecteur comporte au moins un capteur infrarouge, et **en ce que** le dispositif comporte en outre des moyens de focalisation optiques (104) pour focaliser une image infrarouge du convertisseur sur le capteur infrarouge.

6. Dispositif selon l'une des revendications précédentes, **caractérisé en ce que** le détecteur comporte au moins un capteur de flux thermique, de type fluxmètre.

7. Convertisseur (1, 105) pour convertir un rayonnement Téra-Hertz en un rayonnement thermique comportant au moins une zone (ZS₁₁, ZS₁₂, ZS₂₁, ZS₂₂, ZS₃₁) sensible au rayonnement Téra-Hertz, la zone sensible étant agencée pour absorber le rayonnement Téra-Hertz et pour transformer le rayonnement absorbé en chaleur, **caractérisé en ce que** ladite zone sensible est à proximité d'une zone de référence (ZR), de capacité d'absorption connue, pour mesurer la chaleur générée par la zone sensible par rapport à la chaleur générée par la zone de référence, la zone sensible étant formée par une pluralité d'éléments sensibles agencés en une matrice, les éléments sensibles étant séparés par des frontières formant la zone de référence ;.

8. Convertisseur selon la revendication 7, **caractérisé en ce que** la chaleur générée par la zone de référence est résiduelle.

9. Convertisseur selon l'une des revendications 7 à 8, **caractérisé en ce que** la zone sensible comporte un matériau dont l'absorption Téra-Hertz est fonction de la longueur d'onde du rayonnement Téra-Hertz.

10. Convertisseur selon l'une des revendications 7 à 9, **caractérisé en ce que** la zone sensible contient au moins de l'eau, du verre ou/et des nanotubes de carbone.

11. Convertisseur selon la revendication 10, **caractérise en ce que** la zone sensible contient au moins deux liquides térasensibles pouvant être inter-changés par des moyens de canaux pour être exposés au moins alternativement au rayonnement Téra-Hertz, ou en même temps avec des proportions respectives choisies.

12. Convertisseur selon l'une des revendications 7 à 11, **caractérisé en ce que** la zone sensible et la zone de référence sont mitoyennes.

13. Convertisseur selon l'une des revendications 7 à 12, **caractérisé en ce qu'**une couche isolante thermique est intercalée entre la zone sensible et la zone de référence pour réduire des pertes thermiques de la zone sensible.

14. Convertisseur selon l'une des revendications 7 à 13, **caractérisé en ce qu'**il comporte en outre un capteur de flux thermique, de type fluxmètre, accolé à ladite zone sensible.

15. Procédé d'analyse Téra-Hertz, dans lequel on prévoit un convertisseur (1, 105) de rayonnement Téra-Hertz en rayonnement thermique, comportant au moins une zone (ZS₁₁, ZS₁₂, ZS₂₁, ZS₂₂, ZS₃₁) sensible au rayonnement Téra-Hertz agencée pour absorber le rayonnement Téra-Hertz et pour transformer le rayonnement absorbé en chaleur, **caractérisé en ce que** ladite zone sensible est à proximité d'une zone de référence (ZR), de capacité d'absorption connue, et **en ce qu'**on mesure la chaleur générée par la zone sensible par rapport à la chaleur générée par la zone de référence, la zone sensible étant formée par une pluralité d'éléments sensibles agencés en une matrice, les éléments sensibles étant séparés par des frontières formant la zone de référence.

16. Procédé selon la revendication 15,
**caractérisé en ce que** l'on mesure la chaleur générée par chaque élément sensible par rapport à la chaleur générée par la zone de référence pour déterminer une répartition spatiale du rayonnement Téra-Hertz sur le convertisseur.

17. Procédé selon la revendication 16, **caractérisé en ce que**:
- on interpose un objet sur un chemin du rayonnement Téra-Hertz de puissance donnée entre une source (103) du rayonnement Téra-Hertz et le convertisseur (1, 105) ; et
- on détermine une répartition spatiale de la puissance du rayonnement Téra-Hertz reçu sur le convertisseur.

18. Procédé selon la revendication 17, **caractérisé en ce que** l'on détermine une première répartition spatiale de la puissance du rayonnement Téra-Hertz reçue sur le convertisseur, sans objet sur le chemin du rayonnement, et on détermine une deuxième répartition spatiale de la puissance du rayonnement Téra-Hertz reçue, avec l'objet sur le chemin du rayonnement, et on compare la deuxième répartition à la première répartition.

19. Procédé selon l'une des revendications 15 à 18, **caractérisé en ce que** la zone sensible comporte un matériau dont l'absorption Téra-Hertz est fonction de la longueur d'onde et on applique une variation de longueur d'onde pour obtenir une cartographie en fonction de la puissance du rayonnement et de la longueur d'onde.

## Patentansprüche

1. Terahertz-Analysevorrichtung, umfassend eine Terahertzquelle (103), einen Wandler (1, 105) zum Umwandeln von Terahertzstrahlung in Wärmestrahlung und einen Thermodetektor (107), wobei der Wandler wenigstens einen für Terahertzstrahlung empfindlichen Bereich (ZS₁₁, ZS₁₂, ZS₂₁, ZS₂₂, ZS₃₁) aufweist, der dafür ausgelegt ist, die Terahertzstrahlung zu absorbieren und die absorbierte Strahlung in Wärme umzuwandeln, **dadurch gekennzeichnet, dass** sich der empfindliche Bereich in der Nähe eines Referenzbereichs (ZR) mit bekanntem Absorptionsvermögen befindet, und dadurch, dass der Thermodetektor dafür ausgelegt ist, die von dem empfindlichen Bereich erzeugte Wärme im Verhältnis zu der von dem Referenzbereich erzeugten Wärme zu messen, wobei der empfindliche Bereich von mehreren empfindlichen Elementen gebildet wird, die matrixförmig angeordnet sind, wobei die empfindlichen Elemente durch Grenzen getrennt sind, die den Referenzbereich bilden.

2. Vorrichtung nach Anspruch 1, **dadurch gekennzeichnet, dass** der Thermodetektor dazu eingerichtet ist, aus der Messung eine Temperaturdifferenz zwischen dem empfindlichen Bereich und dem Referenzbereich zu berechnen.

3. Vorrichtung nach Anspruch 2, **dadurch gekennzeichnet, dass** die von dem Referenzbereich erzeugte Wärme Restwärme ist, und dadurch, dass die Temperaturdifferenz für die Leistung der Strahlung indikativ ist, die durch den empfindlichen Bereich empfangen wird.

4. Vorrichtung nach einem der vorhergehenden Ansprüche, **dadurch gekennzeichnet, dass** der Detektor dafür ausgelegt ist, die von jedem empfindlichen Element erzeugte Wärme im Verhältnis zu der von dem Referenzbereich erzeugten Wärme zu messen, um eine räumliche Verteilung der Terahertzstrahlung auf dem Wandler zu bestimmen.

5. Vorrichtung nach einem der vorhergehenden Ansprüche, **dadurch gekennzeichnet, dass** der Detektor wenigstens einen Infrarotsensor aufweist, und dadurch, dass die Vorrichtung außerdem optische Fokussierungsmittel (104) aufweist, um ein Infrarotbild des Wandlers auf dem Infrarotsensor zu fokussieren.

6. Vorrichtung nach einem der vorhergehenden Ansprüche, **dadurch gekennzeichnet, dass** der Detektor wenigstens einen Wärmeflusssensor vom Typ eines Wärmeflussmessers aufweist.

7. Wandler (1, 105) zum Umwandeln einer Terahertzstrahlung in eine Wärmestrahlung, welcher wenigstens einen für Terahertzstrahlung empfindlichen Bereich (ZS₁₁, ZS₁₂, ZS₂₁, ZS₂₂, ZS₃₁) aufweist, wobei der empfindliche Bereich dafür ausgelegt ist, die Terahertzstrahlung zu absorbieren und die absorbierte Strahlung in Wärme umzuwandeln, **dadurch gekennzeichnet, dass** sich der empfindliche Bereich in der Nähe eines Referenzbereichs (ZR) mit bekanntem Absorptionsvermögen befindet, um die von dem empfindlichen Bereich erzeugte Wärme im Verhältnis zu der von dem Referenzbereich erzeugten Wärme zu messen, wobei der empfindliche Bereich von mehreren empfindlichen Elementen gebildet wird, die matrixförmig angeordnet sind, wobei die empfindlichen Elemente durch Grenzen getrennt sind, die den Referenzbereich bilden.

8. Wandler nach Anspruch 7, **dadurch gekennzeichnet, dass** die von dem Referenzbereich erzeugte Wärme Restwärme ist.

9. Wandler nach einem der Ansprüche 7 bis 8, **dadurch gekennzeichnet, dass** der empfindliche Bereich ein Material aufweist, dessen Terahertzabsorption von der Wellenlänge der Terahertzstrahlung abhängt.

10. Wandler nach einem der Ansprüche 7 bis 9, **dadurch gekennzeichnet, dass** der empfindliche Bereich wenigstens Wasser, Glas und/oder Kohlenstoffnanoröhren enthält.

11. Wandler nach Anspruch 10, **dadurch gekennzeichnet, dass** der empfindliche Bereich wenigstens zwei für Terahertzstrahlung empfindliche Flüssigkeiten enthält, die durch Kanalmittel untereinander ausgetauscht werden können, um wenigstens abwechselnd gegenüber Terahertzstrahlung exponiert zu werden, oder gleichzeitig mit gewählten jeweiligen Anteilen.

12. Wandler nach einem der Ansprüche 7 bis 11, **dadurch gekennzeichnet, dass** der empfindliche Bereich und der Referenzbereich aneinander angrenzen.

13. Wandler nach einem der Ansprüche 7 bis 12, **dadurch gekennzeichnet, dass** eine Wärmeisolierschicht zwischen dem empfindlichen Bereich und dem Referenzbereich angeordnet ist, um Wärmeverluste des empfindlichen Bereichs zu verringern.

14. Wandler nach einem der Ansprüche 7 bis 13, **dadurch gekennzeichnet, dass** er außerdem einen Wärmeflusssensor vom Typ eines Wärmeflussmessers aufweist, der an dem empfindlichen Bereich anliegt.

15. Terahertz-Analyseverfahren, wobei ein Wandler (1, 105) zum Umwandeln von Terahertzstrahlung in Wärmestrahlung vorgesehen wird, der wenigstens einen für Terahertzstrahlung empfindlichen Bereich (ZS₁₁, ZS₁₂, ZS₂₁, ZS₂₂, ZS₃₁) aufweist, der dafür ausgelegt ist, die Terahertzstrahlung zu absorbieren und die absorbierte Strahlung in Wärme umzuwandeln, **dadurch gekennzeichnet, dass** sich der empfindliche Bereich in der Nähe eines Referenzbereichs (ZR) mit bekanntem Absorptionsvermögen befindet, und dadurch, dass die von dem empfindlichen Bereich erzeugte Wärme im Verhältnis zu der von dem Referenzbereich erzeugten Wärme gemessen wird, wobei der empfindliche Bereich von mehreren empfindlichen Elementen gebildet wird, die matrixförmig angeordnet sind, wobei die empfindlichen Elemente durch Grenzen getrennt sind, die den Referenzbereich bilden.

16. Verfahren nach Anspruch 15, **dadurch gekennzeichnet, dass** die von jedem empfindlichen Element erzeugte Wärme im Verhältnis zu der von dem Referenzbereich erzeugten Wärme gemessen wird, um eine räumliche Verteilung der Terahertzstrahlung auf dem Wandler zu bestimmen.

17. Verfahren nach Anspruch 16, **dadurch gekennzeichnet, dass** ein Objekt auf einem Weg der Terahertzstrahlung von gegebener Leistung zwischen einer Quelle (103) der Terahertzstrahlung und dem Wandler (1, 105) angeordnet wird; und eine räumliche Verteilung der Leistung der auf dem Wandler empfangenen Terahertzstrahlung bestimmt wird.

18. Verfahren nach Anspruch 17, **dadurch gekennzeichnet, dass** eine erste räumliche Verteilung der auf dem Wandler empfangenen Leistung der Terahertzstrahlung ohne Objekt auf dem Weg der Strahlung bestimmt wird und eine zweite räumliche Verteilung der empfangenen Leistung der Terahertzstrahlung mit dem Objekt auf dem Weg der Strahlung bestimmt wird und die zweite Verteilung mit der ersten Verteilung verglichen wird.

19. Verfahren nach einem der Ansprüche 15 bis 18, **dadurch gekennzeichnet, dass** der empfindliche Bereich ein Material aufweist, dessen Terahertzabsorption von der Wellenlänge abhängt, um eine Kartographie in Abhängigkeit von der Leistung der Strahlung und von der Wellenlänge zu erhalten.

## Claims

1. Terahertz analysis device, comprising:
a terahertz source (103),
a converter (1, 105) for converting terahertz radiation into thermal radiation,
and a thermal detector (107),
the converter comprising at least one zone (ZS₁₁, ZS₁₂, ZS₂₁, ZS₂₂, ZS₃₁) sensitive to terahertz radiation, arranged to absorb the terahertz radiation and to convert the absorbed radiation into heat,
**characterized in that** said sensitive zone is in proximity to a reference zone (ZR), of known absorption capacity,
and **in that** the thermal detector is arranged to measure the heat generated by the sensitive zone relative to the heat generated by the reference zone, the sensitive zone being formed of a plurality of sensitive elements arranged into an array, the sensitive elements being separated by boundaries forming the reference zone.

2. Device according to claim 1, **characterized in that** the thermal detector is adapted to calculate, from said measurement, a temperature difference between the sensitive zone and the reference zone.

3. Device according to claim 2, **characterized in that** the heat generated by the reference zone is residual and **in that** the temperature difference is indicative of the power of the radiation received by the sensitive zone.

4. Device according to any one of the above claims, **characterized in that** the detector is arranged to measure the heat generated by each sensitive element relative to the heat generated by the reference zone in order to determine a spatial distribution of the terahertz radiation on the converter.

5. Device according to any one of the above claims, **characterized in that** the detector comprises at least one infrared sensor, and wherein the device additionally comprises an optical focusing means (104) for focusing an infrared image from the converter on the infrared sensor.

6. Device according to any one of the above claims, **characterized in that** the detector comprises at least one heat flow sensor, of the flow meter type.

7. Converter (1, 105) for converting terahertz radiation into thermal radiation, comprising at least one zone (ZS₁₁, ZS₁₂, ZS₂₁, ZS₂₂, ZS₃₁) sensitive to terahertz radiation, the sensitive zone being arranged to absorb the terahertz radiation and to convert the absorbed radiation into heat, **characterized in that** said sensitive zone is in proximity to a reference zone (ZR) of known absorption capacity, in order to measure the heat generated by the sensitive zone relative to the heat generated by the reference zone, the sensitive zone being formed of a plurality of sensitive elements arranged into an array, the sensitive elements being separated by boundaries forming the reference zone.

8. Converter according to claim 7, **characterized in that** the heat generated by the reference zone is residual.

9. Converter according to any one of claims 7 to 8, **characterized in that** the sensitive zone comprises a material in which the terahertz absorption is a function of the wavelength of the terahertz radiation.

10. Converter according to any one of claims 7 to 9, **characterized in that** the sensitive zone contains at least water, glass, and/or carbon nanotubes.

11. Converter according to claim 10, **characterized in that** the sensitive zone contains at least two terasensitive liquids which can be interchanged by channel means in order to be exposed at least alternately to the terahertz radiation, or at the same time with chosen respective proportions.

12. Converter according to any one of claims 7 to 11, **characterized in that** the sensitive zone and the reference zone are adjacent.

13. Converter according to any one of claims 7 to 12, **characterized in that** a thermal insulating layer is interposed between the sensitive zone and the reference zone in order to reduce the heat losses from the sensitive zone.

14. Converter according to any one of claims 7 to 13, **characterized in that** it additionally comprises a heat flow sensor, of the flow meter type, associated with said sensitive zone.

15. Method for terahertz analysis, wherein there is a converter (1, 105) for converting terahertz radiation into thermal radiation, comprising at least one zone (ZS₁₁, ZS₁₂, ZS₂₁, ZS₂₂, ZS₃₁) sensitive to terahertz radiation and arranged to absorb the terahertz radiation and convert the absorbed radiation into heat, **characterized in that** said sensitive zone is in proximity to a reference zone (ZR) of known absorption capacity, and **in that** the heat generated by the sensitive zone is measured relative to the heat generated by the reference zone, the sensitive zone being formed of a plurality of sensitive elements arranged into an array, the sensitive elements being separated by boundaries forming the reference zone.

16. Method according to claim 15, **characterized in that** the heat generated by each sensitive element is measured relative to the heat generated by the reference zone in order to determine a spatial distribution of the terahertz radiation on the converter.

17. Method according to claim 16, **characterized in that**:
- an object is placed in the path of terahertz radiation of given power between a source (103) of terahertz radiation and the converter (1, 105), and
- a spatial distribution of the power of the terahertz radiation received at the converter is determined.

18. Method according to claim 17, **characterized in that** a first spatial distribution of the power of the terahertz radiation received at the converter is determined, without an object in the path of the radiation, and a second spatial distribution of the power of the terahertz radiation received is determined, with the object in the path of the radiation, and the second distribution is compared to the first distribution.

19. Method according to any one of claims 15 to 18, **characterized in that** the sensitive zone comprises a material in which the terahertz absorption is a function of the wavelength, and a variation in the wavelength is applied in order to obtain a mapping as a function of the power of the radiation and of the wavelength.
